# DEMANDE DE BREVET EUROPEEN

(11) **EP 1 884 681 A2**
(43) Date de publication de la demande: **06.02.2008**
(21) Numéro de dépôt: 07112353.3
(22) Date de dépôt: 12.07.2007
(51) Int. Cl.: F16F 15/131, F16C 33/20

(54) **Amortisseur d'oscillation de torsion à palier lisse**

(30) Priorité: 31.07.2006 FR 0653201
(71) Demandeur: Valeo Embrayages, 80009 Amiens (FR)
(72) Inventeur: Merou, Patrice, 80680 Sains en Amienois (FR); Dusseaux, Fabrice, 80090 Amiens (FR); Malley, Matthieu, 60000 Beauvais (FR)

(57) **Abrégé**

L'amortisseur d'oscillations de torsion comprend:
- un composant d'entrée (11) et un composant de sortie (12), reliés l'un à l'autre au moyen d'un palier lisse (13, 14) et pouvant tourner coaxialement,
- au moins un accumulateur d'énergie situé entre le composant d'entrée et le composant de sortie et s'opposant à une rotation relative entre les deux composants,

le palier lisse (13, 14) étant constitué d'un matériau à base de polyamide comprenant des lubrifiants et étant substantiellement dépourvu de matériau fibreux.

## Description

L'invention concerne un amortisseur d'oscillations de torsion comportant au moins un composant d'entrée et un composant de sortie, reliés l'un à l'autre au moyen d'un palier lisse et pouvant tourner coaxialement. Au moins un accumulateur d'énergie est situé entre le composant d'entrée et le composant de sortie, ledit accumulateur d'énergie s'opposant à une rotation relative des deux composants.

La présente invention concerne notamment un double volant amortisseur (dénommé DVA), en particulier pour véhicule automobile, qui comprend comme composant d'entrée un volant d'inertie primaire et comme composant de sortie un volant d'inertie secondaire, où les deux volants sont supportés et centrés l'un sur l'autre au moyen du présent palier lisse.

L'accumulateur d'énergie est en général constitué de ressorts, agencés entre les volants pour les relier en rotation avec une possibilité de débattement angulaire entre les deux volants.

En service, les volants primaire (composant d'entrée) et secondaire (composant de sortie) sont classiquement reliés à un arbre moteur de véhicule automobile et à l'arbre d'entrée d'une boîte de vitesse, en général par l'intermédiaire d'un embrayage, respectivement.

Un tel double volant amortisseur permet d'absorber et d'amortir efficacement les vibrations générées par l'arbre moteur, sans les transmettre au reste du véhicule par l'intermédiaire de la chaîne de transmission.

Un double volant amortisseur où les volants primaire et secondaire sont supportés et centrés l'un sur l'autre au moyen d'un palier lisse est connu de US 4,220,233.

Une conception de DVA utilisant un palier lisse est avantageuse en terme de coût de fabrication en comparaison à une solution plus communément utilisée où les volants primaire et secondaire sont supportés et centrés par un roulement.

On constate cependant que les paliers lisses couramment utilisés, notamment les paliers lisses métalliques permettent de faire fonctionner la chaîne cinématique, mais se détériorent rapidement au cours du temps. On constate en effet une usure rapide et/ou une augmentation importante du coefficient de frottement de ces paliers au bout d'un nombre de cycles insuffisant pour permettre un usage d'un DVA ainsi équipé dans les conditions de service correspondant au cahier des charges actuel. Une fiabilité très grande est requise, par exemple telle que 90% des véhicules sont susceptibles d'atteindre 300 000 km et/ou de durer 20 ans dans les conditions d'usage sans défaillance du DVA.

Il existe donc un besoin pour un amortisseur d'oscillation de torsion du type ci-dessus où un palier lisse est capable d'assurer une pérennité à l'amortisseur supérieure à celle qu'offrent les paliers lisses actuellement utilisés.

Selon l'invention, ce but est atteint à l'aide d'un amortisseur d'oscillations de torsion comprenant :
- un composant d'entrée et un composant de sortie, reliés l'un à l'autre au moyen d'un palier lisse et pouvant tourner coaxialement,
- au moins un accumulateur d'énergie situé entre le composant d'entrée et le composant de sortie et s'opposant à une rotation relative entre les deux parties,
où le palier lisse est constitué d'un matériau à base de polyamide comprenant des lubrifiants et est substantiellement dépourvu de matériau fibreux.

Le choix d'un matériau à base de polyamide comprenant des lubrifiants et dépourvu substantiellement de matériau fibreux permet d'obtenir des durées de vie du palier inattendues et ainsi d'atteindre les performances souhaitées dans le cadre des cahiers des charges actuellement en vigueur. Par « des lubrifiants », on entend selon l'invention au moins deux lubrifiants.

Dans le cadre de la présente invention, on entend par matériau substantiellement dépourvu de matériau fibreux, un matériau ayant moins de 5% en poids de matériau fibreux, voire moins de 1% en poids, et même moins de 0,1% en poids.

On entend notamment par matériaux fibreux des fibres de verre ou de carbone ou d'aramide.

Selon un mode de réalisation de l'invention, les lubrifiants que comprend le matériau à base de polyamide sont choisis parmi la liste constituée du polytétrafluoroéthylène (PTFE), du bisulfure de molybdène (MoS₂), du silicone, du graphite. Au moins deux, voire au moins trois ou au moins quatre des lubrifiants de cette liste peuvent être présents dans le matériau à base de polyamide selon l'invention.

On peut avantageusement choisir les plages de quantité de lubrifiants, exprimées en pourcentage massique rapporté au matériau à base de polyamide, dans les limites suivantes :
PIFE : 5 à 25 %, de préférence au moins 10%, et/ou au plus 20%,
et/ou MOS₂ : 0,5 à 10 %, de préférence au moins 1% et/ou au plus 5%,
et/ou silicone : 0,01 à 2%, de préférence au moins 0,2% et/ou au plus 1%,
et/ou graphite : 0,5 à 10%, de préférence au moins 1% et/ou au plus 5%.

En d'autres termes, on peut avantageusement choisir les plages de quantité de lubrifiants, exprimées en pourcentage massique rapporté au matériau à base de polyamide, dans les limites suivantes :
PIFE : 5 à 25 %, de préférence au moins 10%, et/ou au plus 20%,
MOS₂ : 0,5 à 10 %, de préférence au moins 1% et/ou au plus 5%,
silicone : 0,01 à 2%, de préférence au moins 0,02%, de façon encore plus préférée au moins 0,2% et/ou au plus 1%,
graphite : 0,5 à 10%, de préférence au moins 1% et/ou au plus 5%.

Selon un mode de réalisation, le matériau à base de polyamide comprend à la fois du PTFE, du MoS₂ et du silicone. Selon un autre mode de réalisation, le matériau à base de polyamide comprend à la fois du PTFE, du MoS₂ et du silicone, le silicone étant généralement en faible quantité, typiquement de 0,02% à 1%, par exemple d'environ 0,02 %, ainsi que du graphite.

Un type de silicone utilisé est un polysiloxane. Des matériaux lamellaires tels qu'argile, talc ou autres phylosilicates peuvent être introduits comme lubrifiants.

Selon une caractéristique de la présente invention, le matériau à base de polyamide est à base de polyamide PA 6-6 (nylon).

Selon un autre mode de réalisation, le matériau à base de polyamide est à base de polyamide PA 4-6.

Selon un mode de réalisation, particulièrement préféré selon l'invention, le palier lisse est un palier axial.

Par « palier axial », on entend généralement selon l'invention « rondelle de reprise d'effort » ou « rondelle de frottement axial ». Cette pièce permet généralement de reprendre au moins en partie l'effort axial.

Selon ce dernier mode de réalisation, le palier axial est disposé en contact avec le composant d'entrée et/ou le composant de sortie.

Le palier axial peut également être disposé libre en rotation avec le composant d'entrée et/ou le composant de sortie.

Selon une caractéristique de l'invention, le palier lisse est un palier radial.

Dans un mode de réalisation particulièrement préféré de l'invention, tel qu'illustré par la suite, le palier lisse comporte un palier radial et un palier axial, au moins le palier axial étant selon l'invention. Le palier radiale peut dans ce cas être ou non selon l'invention. Dans un cas particulier de ce mode, les paliers radial et axial forment une seule pièce mécanique et sont bien sûr constitués du même matériau.

Selon un mode de réalisation, le composant d'entrée est relié à un vilebrequin par des vis et le palier est situé radialement à l'intérieur des vis reliant au vilebrequin.

Dans un mode de réalisation, l'amortisseur est un double volant amortisseur comprenant un volant primaire et un volant secondaire.

Selon ce mode de réalisation, le volant primaire et/ou le volant secondaire du double volant amortisseur est (sont) en fonte.

Les inventeurs ont pu mettre en évidence que l'utilisation d'un palier lisse constitué du matériau selon l'invention permet à la fois d'obtenir des coefficients de frottement peu élevés et une usure faible même après un très grand nombre de cycles d'amortissement.

Les inventeurs ont pu déterminer qu'un matériau pour palier lisse permettait de répondre au cahier des charges de l'amortisseur quand le coefficient de friction maximum selon le test « D20 » est inférieur à 0,20, de préférence inférieur à 0,12 et que l'usure après 240 heures selon le test « D20 » est très significativement inférieure à 0,3 mm, de préférence inférieur à 0,1 mm.

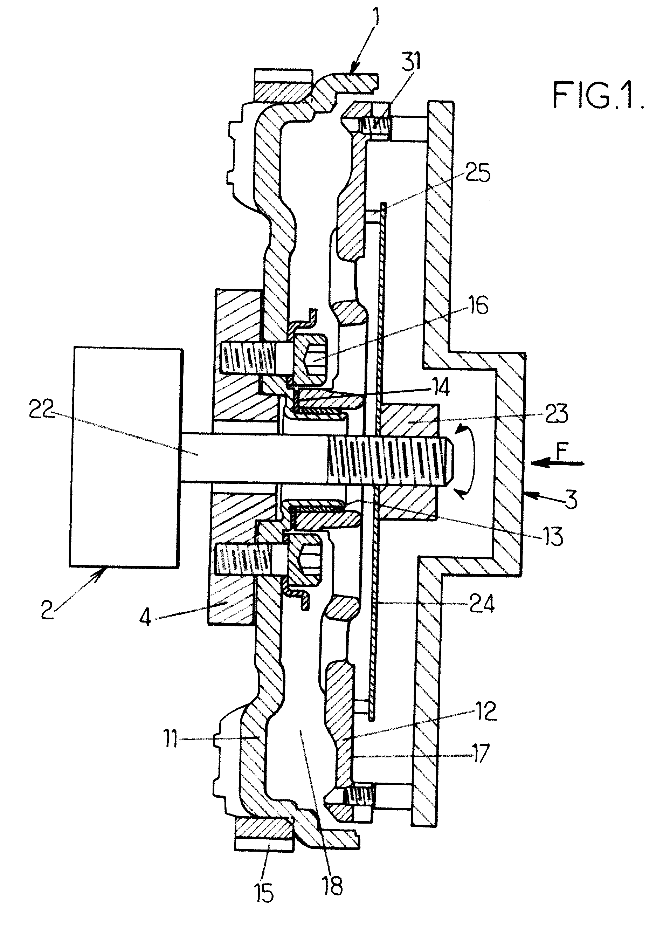

Le test « D20 » est un test d'endurance d'un palier lisse axial, notamment développé pour estimer la durée de vie d'un DVA équipé d'un tel palier. On représente en figure 1 le dispositif d'essai permettant de réaliser le test « D20 » ; on dispose le volant primaire 11 d'un DVA 1, relié en rotation au volant secondaire 12 par l'intermédiaire d'un palier axial 13 et maintenu radialement par un palier radial 14 entre un composant d'appui 3 et un composant d'entraînement 2.

Le volant primaire 11 est fixé à une pièce de structure 4 immobile par l'intermédiaire de vis de fixation 16 communément appelées vis de vilebrequin, situées pour le DVA représenté radialement à l'extérieur du palier axial 13.

Le volant secondaire 12 est entraîné en rotation par un composant d'entraînement 2, où un axe 22, solidaire du composant d'entraînement, reçoit un disque 24 maintenu par un écrou 23. Le disque 24 est flexible radialement pour permettre le rattrapage d'usure des paliers.

Des plots 25 sont disposés sur la face du disque 24 en regard avec la surface 17 du volant secondaire 12, sur laquelle peut être disposé un embrayage dans un montage classique d'un DVA. Les plots 25 sont maintenus solidaires du volant secondaire 12, par exemple par des vis.

Une force F est appliquée par un composant d'appui 3 fixé au volant secondaire 12 par des vis 31.

La force F d'appui sur le volant secondaire 12 est variable et vaut pendant un tiers du temps la charge du mécanisme en position débrayée et pendant deux tiers du temps la charge du mécanisme en position embrayée.

Le composant d'entraînement 2 est animé d'un mouvement oscillatoire à doubles fréquences superposées avec une amplitude angulaire de +/- 30° à basse fréquence (1,5 Hz) et de + /- 1,9° à haute fréquence (30 Hz).

L'essai est effectué à 80°C.

De manière usuelle le volant primaire 11 reçoit une couronne de démarrage 15. Un DVA complet comprendrait de manière connue en soi des ressorts, notamment circonférentiels disposés entre le volant primaire 11 et le volant secondaire 12, dans l'espace noté 18.

L'architecture générale d'un tel DVA ressort par exemple du document brevet FR 2 714 439.

Des essais de corrélation ont permis d'établir qu'il est ainsi possible d'être représentatif du comportement d'un palier axial dans un DVA compris dans un véhicule ayant parcouru 300 000 km après 295 heures de ce test.

On mesure en continu le couple résistant de frottement permettant ainsi de déterminer le coefficient de frottement maximum pendant l'essai.

L'usure du palier axial est déterminée en interrompant l'essai et en mesurant l'épaisseur du palier axial au cours du temps.

L'invention sera mieux comprise et d'autres caractéristiques, détails et avantages de celle-ci apparaitront plus clairement à la lecture de la description qui suit, faite à titre d'exemple en référence aux dessins annexés dans lesquels :
- la figure 1 est une vue schématique en coupe axiale d'un double volant amortisseur équipé d'un palier lisse monté sur le banc de test d'endurance « D20 » ;
- la figure 2 est une vue détaillée de la figure précédente ;
- la figure 3 est une vue d'un palier axial selon l'invention.

Comme présenté ci-dessus, la figure 1 montre le dispositif utilisé pour mettre en oeuvre le test « D20 ».

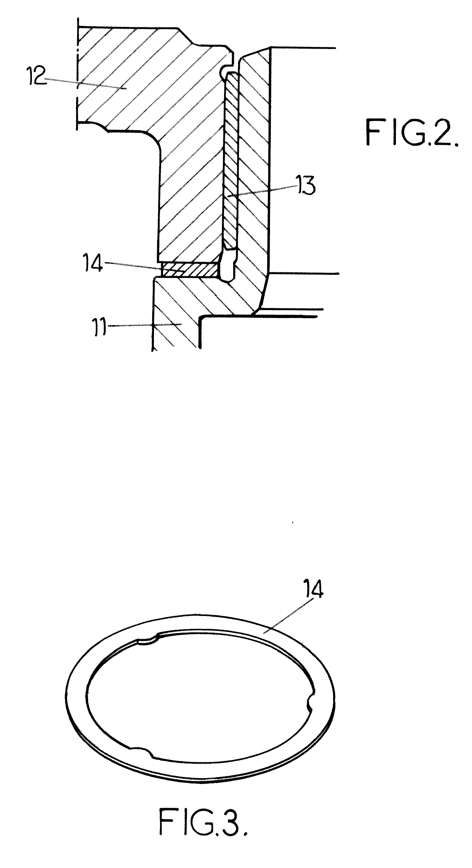

La figure 2 présente un détail de la figure 1 où apparaissent le volant primaire 11, le volant secondaire 12 ainsi que les paliers axial 13 et radial 14.

La figure 3 présente un palier axial 13 sensiblement annulaire, qui dans le cadre de l'invention est composé d'un matériau sélectionné, à base de polyamide comprenant des lubrifiants et dépourvu de matériau fibreux.

Afin de déterminer les matériaux susceptibles de constituer un palier permettant à un amortisseur d'atteindre les exigences du cahier des charges actuel, de nombreux matériaux ont fait l'objet d'essais dans les conditions du test « D20 » mentionné ci-dessus.

Le tableau 1 résume les essais effectués avec des paliers axiaux constitués des matériaux à base d'une matrice comprenant un ou des lubrifiant(s) et éventuellement des fibres de renfort tels que mentionnés dans les lignes 2 à 4 dudit tableau.

Les résultats du test « D20 » effectué avec un tel palier axial pour chacun des échantillons Ech 1 à Ech 10 figurent dans ce tableau, où sont reportés le coefficient de friction maximal et l'usure après 40 heures, après 120 heures et après 240 heures.

La configuration d'essai correspond au schéma de la figure 2, où le palier axial a une forme sensiblement annulaire selon la figure 3, un diamètre interne de 45 mm et un diamètre externe de 52,5 mm. Son épaisseur initiale est de 1,5 mm.

Ledit palier axial est en contact direct avec un volant primaire en tôle et un volant secondaire en fonte.

Dans le cadre de ces essais, le palier radial a été choisi en Permaglide quelle que soit la composition du palier axial.

L'échantillon, Ech 1, est un palier axial en polyamide 4-6 (PA 46) qui comprend 10% de fibres de carbone, ainsi que des nano-composites. Les nano-composites utilisés sont typiquement à base d'argile et/ou de talc et/ou de silice et/ou d'alumine. Ce matériau est considéré comme autolubrifiant et correspond à la référence commerciale LUVOCOM 19-7816 de la société LEHVOSS.

L'échantillon, Ech 2, est un palier axial en polyphtalamide (PPA) qui comprend 10% de polytetrafluoroéthylène (PTFE), 20% de charges minérales et du silicone, commercialisé par la société RTP sous la référence commerciale 4099AX102732.

L'échantillon, Ech 3, est un palier axial en polyéthercétone (PEEK) qui comprend 15% de sulfure de molybdène (MoS₂) et 15% de PTFE, commercialisé par la société LEHVOSS sous la référence commerciale LUVOCOM 1105/MS/15/TF/15.

L'échantillon, Ech 4, est un palier axial en PPA qui comprend du PTFE, des fibres d'aramide, du silicone, commercialisé par la société RTP sous la référence commerciale 4099AX102733.

L'échantillon, Ech 5, est un palier axial en PEEK qui comprend 10% de fibres de carbone, ainsi que des nano composites, commercialisé par la société LEHVOSS sous la référence commerciale LUVOCOM 1105-7678.

L'échantillon, Ech 6, est un palier axial en polyimide (PI) qui comprend 15% de graphite et 10% de PTFE, commercialisé par la société Saint-Gobain Performance Plastics sous la référence commerciale MELDIN 7211.

L'échantillon, Ech 7, est un palier axial en polyamide-imide (PAI) qui comprend 20% de graphite et 3% de PTFE, commercialisé par la société SOLVAY sous la référence commerciale TORLON 4275.

L'échantillon, Ech 8, est un palier axial en polyamide 6-6 (PA66) qui comprend 17% de PTFE, 1,7% de MoS₂, 0,02% de silicone, commercialisé par la société LEHVOSS sous la référence commerciale LUVOCOM 1-1120.

L'échantillon, Ech 9, est un palier axial en PA46 qui comprend 17% de PTFE, 1,7% de MoS₂, 0,02% de silicone, commercialisé par la société LEHVOSS sous la référence commerciale LUVOCOM 19-7330 VP.

L'échantillon, Ech 10, est un palier axial en PI qui comprend 15% de graphite et 10% de PTFE, commercialisé par la société DUPONT sous la référence commerciale VESPEL SP211.

Alors que l'ensemble des matériaux utilisés pour ces essais sont connus pour avoir un coefficient de frottement statique faible, en général compris entre 0,07 et 0,15, on constate que dans les conditions d'usage d'un palier pour amortisseur d'oscillations de torsion, un certain nombre de ces matériaux conduisent à des coefficients de friction maximum supérieurs à 0,20, ce qui les rend impropres à une telle utilisation. On souhaite en effet obtenir des coefficients de friction maximum faibles et constants, notamment dans le cas d'un DVA où le palier axial supporte la charge du mécanisme lors des phases de débrayage. Il en résulte un couple de frottement susceptible de provoquer des bruyances non désirées si le coefficient de frottement dépasse un certain seuil.

Les matériaux utilisés pour Ech 5, Ech 6, Ech 7 et Ech 10 conduisent à des coefficients de friction maximum supérieurs à 0,20.

Le paramètre d'usure des matériaux, dans les conditions spécifiques d'usage d'un palier pour amortisseur d'oscillations de torsion, est également déterminant. On constate que, dans ces conditions, les échantillons Ech 1, Ech 2, Ech 3, Ech 4 et Ech 5 s'usent particulièrement vite puisque leur usure dépasse 0,30 mm en moins de 120 heures.

L'échantillon Ech 6 s'use moins vite, mais encore trop pour l'application désirée puisque son usure atteint plus de 0,30 mm en moins de 240 heures.

Seuls les échantillons Ech 7 à Ech 10 présentent, dans les conditions des essais, une usure particulièrement basse, puisqu'après 240 heures, leur usure est inférieure à 0,06 mm.

Comme vu ci-dessus, les matériaux des Ech 7 et Ech 10 ne peuvent convenir pour l'application désirée à cause de l'augmentation excessive de leur coefficient de frottement.

Il ressort de ces essais que les matériaux qui satisfont au cahier des charges sont à base de polyamide (PA) comprenant des lubrifiants et substantiellement dépourvus de matériau fibreux, tel qu'illustré par les essais des Ech 8 et Ech 9.

On constate en effet que l'introduction de fibres dans un PA conduit à une usure très élevée (Ech 1).

Une matrice PEEK ou PPA conduit également à une usure trop élevée (voir Ech 3, Ech 5, Ech 2, Ech 4) et une matrice PI ou PAI à un coefficient de friction maximum trop élevé (voir Ech 6, Ech 7, Ech 10).

Bien entendu, la présente invention n'est pas limitée aux modes de réalisation décrits et représentés à titre d'exemples illustratifs et non limitatifs.

Ainsi, un palier selon l'invention peut avantageusement être disposé dans tout DVA, quelle que soit la disposition des accumulateurs d'énergie, et par exemple dans un DVA où des ressorts sont disposés de manière radiale, tel que par exemple décrit dans le document brevet FR 2 716 511.

En outre l'amortisseur d'oscillations de torsion peut ne pas être un DVA, mais également tout amortisseur avec un composant d'entrée et un composant de sortie, comme par exemple un embrayage traditionnel.

Il convient de noter que le palier selon l'invention peut être axial, mais également radial, voire être un palier d'une seule pièce formant à la fois palier axial et radial.

Dans une variante de réalisation, le palier selon l'invention, en particulier le palier axial selon l'invention, est associé ou combiné avec un roulement à billes ou à aiguilles.

**TABLEAU 1**

| **Echantillon** | **Ech 1** | **Ech 2** | **Ech 3** | **Ech 4** | **Ech 5** | **Ech 6** | **Ech 7** | **Ech 8** | **Ech 9** | **Ech 10** |
|---|---|---|---|---|---|---|---|---|---|---|
| **Matrice** | PA 46 | PPA | PEEK | PPA | PEEK | PI | PAI | PA 66 | PA 46 | PI |
| **Lubrifiant** | Nano-c. | PIFE (10%); Sil. | MoS₂ (15%); PIFE (15%) | PIFE; Sil. | Nano-c. | Gr. (15%) PIFE (10%) | Gr. (20%; PIFE (3%) | PTFE (17%); MoS₂ (1,7%); Sil. (0,02%) | PIFE (17%); MoS₂ (1,7%); Sil. (0,02%) | Gr. (15%); PIFE (10%) |
| **Fibres** | Carbone (10%) | - | - | Aramide | Carbone (10%) | - | - | - | - | - |
| **Coefficient de friction maximum** | 0,12 | 0,09 | 0,11 | 0,06 | 0,35 | 0,23 | 0,26 | 0,08 | 0,16 | 0,23 |
| **Usure Après 40 h** | » 0,30 | 0,35 | 0,30 | 0,21 | 0,21 | 0,07 | 0,03 | 0,024 | 0,015 | 0,005 |
| **Après 120 h** | - | - | » 0,30 | > 0,30 | > 0,30 | 0,17 | 0,052 | 0,046 | 0,038 | 0,015 |
| **Après 240 h** | - | - | - | - | - | > 0,30 | 0,058 | 0,056 | 0,056 | 0,034 |

| | | | | | | | | | | |
|---|---|---|---|---|---|---|---|---|---|---|
| Sil. = Silicone Gr. = Graphite Nano-c. = Nano-composite | | | | | | | | | | |

## Revendications

1. Amortisseur d'oscillations de torsion comprenant :
- un composant d'entrée (11) et un composant de sortie (12), reliés l'un à l'autre au moyen d'un palier lisse (13, 14) et pouvant tourner coaxialement,
- au moins un accumulateur d'énergie situé entre le composant d'entrée et le composant de sortie et s'opposant à une rotation relative entre les deux composants,
**caractérisé en ce que** le palier lisse (13, 14) est constitué d'un matériau à base de polyamide comprenant des lubrifiants et est substantiellement dépourvu de matériau fibreux.

2. Amortisseur selon la revendication 1 **caractérisé en ce que** les lubrifiants que comprend le matériau à base de polyamide sont choisis parmi la liste constituée du polytétrafluoroéthylène (PTFE), du bisulfure de molybdène (MoS₂), du silicone, du graphite.

3. Amortisseur selon la revendication 2 **caractérisé en ce que** les plages de quantité de lubrifiants, exprimées en pourcentage massique rapporté au matériau à base de polyamide, sont les suivantes :
PTFE : 5 à 25 %, de préférence au moins 10%, et/ou au plus 20%,
MoS₂ : 0,5 à 10 %, de préférence au moins 1% et/ou au plus 5%,
silicone : 0,01 à 2%, de préférence au moins 0,02%, de façon encore plus préférée au moins 0,2% et/ou au plus 1%,
graphite : 0,5 à 10%, de préférence au moins 1% et/ou au plus 5%.

4. Amortisseur selon l'une quelconque des revendications précédentes, **caractérisé en ce que** le matériau à base de polyamide est à base de polyamide PA 6-6 (nylon).

5. Amortisseur selon l'une des revendications 1 à 3 **caractérisé en ce que** le matériau à base de polyamide est à base de polyamide PA 4-6.

6. Amortisseur selon l'une quelconque des revendications précédentes **caractérisé en ce que** le palier lisse est un palier axial.

7. Amortisseur selon la revendication 6 **caractérisé en ce que** le palier axial est disposé en contact avec le composant d'entrée et/ou le composant de sortie.

8. Amortisseur selon l'une des revendications 6 ou 7 **caractérisé en ce que** le palier axial est disposé libre en rotation avec le composant d'entrée et/ou le composant de sortie.

9. Amortisseur selon l'une quelconque des revendications précédentes **caractérisé en ce que** le palier lisse est un palier radial.

10. Amortisseur selon l'une quelconque des revendications précédentes, **caractérisé en ce que** le composant d'entrée est relié à un vilebrequin par des vis et **en ce que** le palier est situé radialement à l'intérieur des vis reliant au vilebrequin.

11. Amortisseur selon l'une quelconque des revendications précédentes **caractérisé en ce que** l'amortisseur est un double volant amortisseur comprenant un volant primaire et un volant secondaire.

12. Amortisseur selon la revendication 12 **caractérisé en ce que** le volant primaire et/ou le volant secondaire du double volant amortisseur est (sont) en fonte.
